# EUROPEAN PATENT APPLICATION

(11) **EP 4 712 656 A1**
(43) Date of publication of application: **18.03.2026**
(21) Application number: 23935964.9
(22) Date of filing: 06.05.2023
(51) Int. Cl.: H04W 72/25

(54) **METHOD AND APPARATUS FOR CANCELING SL CONSECUTIVE LBT FAILURES, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/092616
(87) International publication number: WO 2024/229635

(57) **Abstract**

Provided in the present disclosure are a method and apparatus for canceling SL consecutive LBT failures, a communication device, a communication system, and a storage medium. The method comprises: when an SL consecutive LBT failure canceling condition is met, canceling the SL consecutive LBT failures triggered by a resource block set. The method of the present disclosure improves the accuracy of canceling the SL consecutive LBT failures triggered by the resource block set.

## Description

### TECHNICAL FIELD

The disclosure relates to the field of communication technology, in particular to a method and an apparatus for canceling a sidelink (SL) consistent listen-before-talk (LBT) failure, a communication device, a communication system and a storage medium.

### BACKGROUND

Sidelink (SL) communication system may use unlicensed spectrum. A terminal needs to perform listen-before-talk (LBT) when sending SL data on the unlicensed spectrum. A consistent LBT failure mechanism may also be applied to SL communication on the unlicensed spectrum.

### SUMMARY

The method in the present disclosure may be used to solve a technical problem of "how a terminal cancels an SL consistent LBT failure triggered by a resource block set".

The present disclosure provides a method and an apparatus for canceling an SL consistent LBT failure, a communication device, a communication system and a storage medium.

According to a first aspect of embodiments of the present disclosure, there is provided a method for canceling an SL consistent LBT failure. The method includes canceling an SL consistent LBT failure triggered by a resource block set, in which an SL consistent LBT failure cancellation condition is satisfied.

According to a second aspect of embodiments of the present disclosure, there is provided a method for canceling an SL consistent LBT failure. The method includes sending a control instruction to the terminal, in which the control instruction is used by the terminal to determine that an SL consistent LBT failure cancellation condition is satisfied and cancel an SL consistent LBT failure triggered by a resource block set.

According to a third aspect of embodiments of the present disclosure, there is provided a method for canceling an SL consistent LBT failure. The method is configured in a communication system including a network device and a terminal, and includes: the terminal canceling an SL consistent LBT failure triggered by a resource block set, in which an SL consistent LBT failure cancellation condition is satisfied.

According to a fourth aspect of embodiments of the present disclosure, there is provided a first apparatus for canceling an SL consistent LBT failure. The first apparatus includes a processing module, configured to cancel an SL consistent LBT failure triggered by a resource block set, in which an SL consistent LBT failure cancellation condition is satisfied.

According to a fifth aspect of embodiments of the present disclosure, there is provided a second apparatus for canceling an SL consistent LBT failure. The second apparatus includes a sending module, configured to send a control instruction to a terminal, in which the control instruction is used by the terminal to determine that an SL consistent LBT failure cancellation condition is satisfied and cancel an SL consistent LBT failure triggered by a resource block set.

According to a sixth aspect of embodiments of the present disclosure, there is provided a communication device. The communication device includes one or more processors. The processor is configured to call instructions to enable the communication device to perform the method for canceling an SL consistent LBT failure as described in any one of the first aspect and the second aspect.

According to a seventh aspect of embodiments of the present disclosure, there is provided a communication system. The communication system includes a terminal and a network device. The terminal is configured to implement the method for canceling an SL consistent LBT failure as described in the first aspect. The network device is configured to implement the method for canceling an SL consistent LBT failure as described in the second aspect.

According to an eighth aspect of embodiments of the present disclosure, there is provided a storage medium having instructions stored thereon. When the instructions are performed on a communication device, the communication device is caused to perform the method for canceling an SL consistent LBT failure as described in any one of the first aspect and the second aspect.

### BRIEF DESCRIPTION OF THE DRAWINGS

The above and/or additional aspects and advantages of the present disclosure may become apparent and readily understood from the following description of embodiments in combination with the accompanying drawings, in which:
FIG. 1 is a schematic diagram illustrating an architecture of a communication system according to an embodiment of the disclosure.
FIG. 2 is a schematic diagram illustrating an interaction of a method for canceling an SL consistent LBT failure according to an embodiment of the disclosure.
FIGs. 3a-3j are flowcharts illustrating a method for canceling an SL consistent LBT failure according to embodiments of the disclosure.
FIG. 4 is a flowchart illustrating a method for canceling an SL consistent LBT failure according to an embodiment of the disclosure.
FIGs. 5a-5b are flowcharts illustrating a method for canceling an SL consistent LBT failure according to embodiments of the disclosure.
FIG. 6a is a schematic diagram illustrating a structure of a first apparatus for canceling an SL consistent LBT failure according to an embodiment of the disclosure.
FIG. 6b is a schematic diagram illustrating a structure of a second apparatus for canceling an SL consistent LBT failure according to an embodiment of the disclosure.
FIG. 7a is a schematic diagram illustrating a structure of a communication device according to an embodiment of the disclosure.
FIG. 7b is a schematic diagram illustrating a structure of a chip according to an embodiment of the disclosure.

### DETAILED DESCRIPTION

Embodiments of the present disclosure provide a method and an apparatus for canceling an SL consistent LBT failure, a communication device, a communication system and a storage medium.

According to a first aspect, embodiments of the present disclosure provide a method for canceling an SL consistent LBT failure. The method includes canceling an SL consistent LBT failure triggered by a resource block set, in which an SL consistent LBT failure cancellation condition is satisfied.

In the above embodiment, the terminal may cancel the SL consistent LBT failure triggered by the resource block set when the SL consistent LBT failure cancellation condition is satisfied. Therefore, the method may improve an accuracy of canceling the SL consistent LBT failure triggered by the resource block set, and avoid erroneously indicating to a network device information of the resource block set that triggers the SL consistent LBT failure.

In combination with some embodiments of the first aspect, in some embodiments, satisfying the SL consistent LBT failure cancellation condition includes at least one of:
a resource allocation mode of the terminal being switched;
a resource pool to which the resource block set belongs being reconfigured;
a resource pool scheduled by a network device for the terminal being switched from a resource pool to which the resource block set belongs to another resource pool;
a resource pool selected by the terminal being switched from a resource pool to which the resource block set belongs to another resource pool;
a medium access control (MAC) entity being reset; or
an SL functionality of the MAC entity for any unicast connection being reset.

In the above embodiment, the conditions under which the terminal cancels the SL consistent LBT of the resource block set are provided, ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, the SL consistent LBT failure cancellation condition is satisfied, canceling the SL consistent LBT failure triggered by the resource block set includes:
receiving a control instruction sent by a network device; and
determining, according to the control instruction, that the SL consistent LBT failure cancellation condition is satisfied, and canceling the SL consistent LBT failure triggered by the resource block set.

In the above embodiment, the terminal may determine, according to the control instruction sent by a network device, that the SL consistent LBT failure cancellation condition is satisfied, and cancel the SL consistent LBT failure triggered by the resource block set, thus ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, determining, according to the control instruction, that the SL consistent LBT failure cancellation condition is satisfied, and canceling the SL consistent LBT failure triggered by the resource block set includes:
determining, according to the control instruction, that a resource allocation mode of the terminal is switched, and canceling the SL consistent LBT failure triggered by the resource block set, in which the control instruction is used to configure or reconfigure the resource allocation mode of the terminal.

In the above embodiment, the control instruction is limited to configure or reconfigure the resource allocation mode of the terminal. When determining that the resource allocation mode of the terminal is switched based on the control instruction for configuring or reconfiguring the resource allocation mode of the terminal, the terminal cancels the SL consistent LBT failure triggered by the resource block set, thus ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, determining, according to the control instruction, that the resource allocation mode of the terminal is switched, and canceling the SL consistent LBT failure triggered by the resource block set includes:
determining, according to the control instruction, that the resource allocation mode of the terminal is switched from a network scheduling mode to a self-selection mode; and
canceling the SL consistent LBT failure triggered by the resource block set, in which a resource block set in a resource pool scheduled by the network device triggers the SL consistent LBT failure and does not cancel the SL consistent LBT failure.

In the above embodiment, when the terminal determines, based on the control instruction for configuring the resource allocation mode of the terminal, that the resource allocation mode of the terminal is switched from the network scheduling mode to the self-selection mode, if the resource block set being present in the resource pool scheduled by the network device triggers the SL consistent LBT failure and the SL consistent LBT failure is not canceled, the terminal cancels the SL consistent LBT triggered by the resource block set. Therefore, when the resource allocation mode of the terminal is switched from the network scheduling mode to the self-selection mode, the SL consistent LBT failure triggered by the resource block set in the resource pool scheduled by the network device is canceled, ensuring that the terminal may successfully cancel the SL consistent LBT triggered by the resource block set, and effectively avoiding erroneously indicating to the network device information of the resource block set that triggers the SL consistent LBT failure.

In combination with some embodiments of the first aspect, in some embodiments, determining, according to the control instruction, that the resource allocation mode of the terminal is switched, and canceling the SL consistent LBT failure triggered by the resource block set includes:
determining, according to the control instruction, that the resource allocation mode of the terminal is switched from a self-selection mode to a network scheduling mode; and
canceling the SL consistent LBT failure triggered by the resource block set, in which a resource block set in a resource pool selected by the terminal triggers the SL consistent LBT failure and does not cancel the SL consistent LBT failure. \

In the above embodiment, when the terminal determines, based on the control instruction for configuring the resource allocation mode of the terminal, that the resource allocation mode of the terminal is switched from the self-selection mode to the network scheduling mode, if the resource block set being present in the resource pool selected by the terminal triggers the SL consistent LBT failure and the SL consistent LBT failure is not canceled, the terminal cancels the SL consistent LBT triggered by the resource block set. Therefore, when the resource allocation mode of the terminal is switched from the self-selection mode to the network scheduling mode, the SL consistent LBT failure triggered by the resource block set in the resource pool selected by the terminal is canceled, ensuring that the terminal may successfully cancel the SL consistent LBT triggered by the resource block set, and effectively avoiding erroneously indicating to the network device information of the resource block set that triggers the SL consistent LBT failure.

In combination with some embodiments of the first aspect, in some embodiments, determining, according to the control instruction, that the SL consistent LBT failure cancellation condition is satisfied, and canceling the SL consistent LBT failure triggered by the resource block set includes:
canceling the SL consistent LBT failure triggered by the resource block set, in which the control instruction is used to reconfigure a resource pool, and a resource block set in the resource pool reconfigured triggers the SL consistent LBT failure and does not cancel the SL consistent LBT failure.

In the above embodiments, the control instruction is limited to reconfiguring the resource pool. When the terminal receives the control instruction for reconfiguring the resource pool, if the resource block set being present in the resource pool triggers the SL consistent LBT failure and the SL consistent LBT failure is not canceled, the terminal cancels the SL consistent LBT failure triggered by the resource block set, thus ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, determining, according to the control instruction, that the SL consistent LBT failure cancellation condition is satisfied, and canceling the SL consistent LBT failure triggered by the resource block set includes:
canceling the SL consistent LBT failure triggered by the resource block set, in which the control instruction is used to instruct the network device to switch a resource pool scheduled for the terminal from a current resource pool to another resource pool, and a resource block set being present in the current resource pool triggers the SL consistent LBT failure and does not cancel the SL consistent LBT failure.

In the above embodiment, the control instruction is limited to instructing the network device to switch the resource pool scheduled for the terminal from the current resource pool to another resource pool. When the resource pool scheduled by the network device changes, if the resource block set being present in the current resource pool triggers the SL consistent LBT failure and the SL consistent LBT failure is not canceled, the terminal cancels the SL consistent LBT failure triggered by the resource block set, thus ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, the SL consistent LBT failure cancellation condition is satisfied, canceling the SL consistent LBT failure triggered by the resource block set includes:
switching a resource pool selected by the terminal from a current resource pool to another resource pool;
canceling the SL consistent LBT failure triggered by the resource block set, wherein a resource block set being present in the current resource pool triggers the SL consistent LBT failure and does not cancel the SL consistent LBT failure.

In the above embodiments, when the resource pool self-selected by the terminal changes, if the resource block set being present in the current resource pool triggers the SL consistent LBT failure and the SL consistent LBT failure is not canceled, the terminal cancels the SL consistent LBT failure triggered by the resource block set, thus ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, the SL consistent LBT failure cancellation condition is satisfied, canceling the SL consistent LBT failure triggered by the resource block set includes:
canceling the SL consistent LBT failure triggered by the resource block set, in which a MAC entity is reset.

In the above embodiments, the terminal may cancel the SL consistent LBT failure triggered by the resource block set when the MAC entity is reset, thus ensuring that the terminal may successfully cancel the SL consistent LBT of the resource block set, and effectively avoiding erroneously indicating to the network device information of the resource block set that triggers the SL consistent LBT failure.

In combination with some embodiments of the first aspect, in some embodiments, the resource block set is a resource block set in a configured resource pool that triggers the SL consistent LBT failure and does not cancel the SL consistent LBT failure.

In the above embodiments, the resource block set is limited to the resource block set in the configured resource pool that triggers the SL consistent LBT failure and does not cancel the SL consistent LBT failure, thus ensuring that the terminal may accurately and effectively cancel the SL consistent LBT of the resource block set, and effectively avoiding erroneously indicating to the network device information of the resource block set that triggers the SL consistent LBT failure.

In combination with some embodiments of the first aspect, in some embodiments, the SL consistent LBT failure cancellation condition is satisfied, canceling the SL consistent LBT failure triggered by the resource block set includes:
canceling the SL consistent LBT failure triggered by the resource block set associated with any unicast connection, in which an SL functionality of a MAC entity for the any unicast connection is reset.

In the above embodiments, when the SL functionality of the MAC entity for any unicast connection, the terminal may cancel the SL consistent LBT failure triggered by the resource block set associated with the any unicast connection, thus ensuring that the terminal may successfully cancel the SL consistent LBT of the resource block set associated with the unicast connection, and effectively avoiding erroneously indicating to the network device information of the resource block set that triggers the SL consistent LBT failure.

In combination with some embodiments of the first aspect, in some embodiments, the resource block set associated with the any unicast connection is a resource block set used by at least one of a physical sidelink shared channel (PSSCH), a physical sidelink control channel (PSCCH), or a physical sidelink feedback channel (PSFCH) associated with the any unicast connection.

In the above embodiments, it is limited that the resource block set associated with the any unicast connection is the resource block set used by at least one of the PSSCH, PSCCH, or PSFCH associated with the any unicast connection, thus ensuring that the terminal may successfully cancel the SL consistent LBT of the resource block set associated with the unicast connection, and effectively avoiding erroneously indicating to the network device information of the resource block set that triggers the SL consistent LBT failure.

In combination with some embodiments of the first aspect, in some embodiments, the method further includes:
canceling an SL consistent LBT failure report procedure, in which a MAC entity is reset.

In the above embodiments, the terminal may cancel the SL consistent LBT failure report procedure when the MAC entity is reset, thus effectively avoiding erroneously sending the SL consistent LBT failure to the network device.

In combination with some embodiments of the first aspect, in some embodiments, canceling the SL consistent LBT failure report procedure includes at least one of:
canceling generation of a first report in a case where the first report is being generated, wherein the first report is used to indicate to a network device information of the resource block set that triggers the SL consistent LBT failure; or
canceling sending or resending a first report to a network device in a case where the first report has been generated.

In the above embodiments, if the first report for indicating to the network device the information of the resource block set that triggers the SL consistent LBT failure is being generated, the terminal cancels the generation of the first report; if the first report has already been generated, sending the first report to the network device is canceled, thus effectively avoiding erroneously indicating to the network device information of the resource block set that triggers the SL consistent LBT failure.

According to a second aspect, embodiments of the present disclosure provide a method for canceling an SL consistent LBT failure. The method includes
sending a control instruction to the terminal, in which the control instruction is used by the terminal to determine that an SL consistent LBT failure cancellation condition is satisfied and to cancel an SL consistent LBT failure triggered by a resource block set.

In the above embodiments, the network device may send the control instruction to the terminal, such that the terminal may determine that the SL consistent LBT failure cancellation condition is satisfied and cancel the SL consistent LBT failure triggered by the resource block set. Therefore, the method may improve an accuracy of canceling, by the terminal, the SL consistent LBT failure triggered by the resource block set, and avoid erroneously indicating to the network device by the terminal information of the resource block set that triggers the SL consistent LBT failure.

In combination with some embodiments of the second aspect, in some embodiments, satisfying the SL consistent LBT failure cancellation condition includes at least one of:
a resource allocation mode of the terminal being switched;
a resource pool to which the resource block set belongs being reconfigured; or
a resource pool scheduled by the network device for the terminal being switched from a resource pool to which the resource block set belongs to another resource pool.

In combination with some embodiments of the second aspect, in some embodiments, the control instruction is used to configure a resource allocation mode of the terminal, and the control instruction is used by the terminal to determine that the resource allocation mode of the terminal is switched, and to cancel the SL consistent LBT failure triggered by the resource block set, in which the resource block set triggers the SL consistent LBT failure and does not cancel the SL consistent LBT failure.

In combination with some embodiments of the second aspect, in some embodiments, the control instruction is used to reconfigure a resource pool, and the control instruction is used by the terminal to cancel the SL consistent LBT failure triggered by the resource block set in a case where a resource block set being present in the resource pool reconfigured triggers the SL consistent LBT failure and does not cancel the SL consistent LBT failure.

In combination with some embodiments of the second aspect, in some embodiments, the control instruction is used to instruct the network device to switch a resource pool scheduled for the terminal from a current resource pool to another resource pool, and the control instruction is used by the terminal to cancel the SL consistent LBT failure triggered by the resource block set in a case where a resource block set being present in the current resource pool triggers the SL consistent LBT failure and does not cancel the SL consistent LBT failure.

According to a third aspect, embodiments of the present disclosure provide a method for canceling an SL consistent LBT failure. The method is configured in a communication system including a network device and a terminal, and the method includes:
the terminal canceling an SL consistent LBT failure triggered by a resource block set, in which an SL consistent LBT failure cancellation condition is satisfied.

In the above embodiments, the network device may send the control instruction to the terminal, such that the terminal may determine that the SL consistent LBT failure cancellation condition is satisfied and cancel the SL consistent LBT failure triggered by the resource block set. Therefore, the method may improve an accuracy of canceling, by the terminal, the SL consistent LBT failure triggered by the resource block set, and avoid erroneously indicating to the network device by the terminal information of the resource block set that triggers the SL consistent LBT failure.

In combination with some embodiments of the third aspect, in some embodiments, satisfying the SL consistent LBT failure cancellation condition includes at least one of:
a resource allocation mode of the terminal being switched;
a resource pool to which the resource block set belongs being reconfigured;
a resource pool scheduled by the network device for the terminal being switched from a resource pool to which the resource block set belongs to another resource pool;
a resource pool selected by the terminal being switched from a resource pool to which the resource block set belongs to another resource pool;
a medium access control (MAC) entity being reset; or
an SL functionality of the MAC entity for any unicast connection being reset.

In combination with some embodiments of the third aspect, in some embodiments, the method further includes:
the network device sending a control instruction; and
the terminal determining, according to the control instruction, that the SL consistent LBT failure cancellation condition is satisfied, and canceling the SL consistent LBT failure triggered by the resource block set.

In combination with some embodiments of the third aspect, in some embodiments, the SL consistent LBT failure cancellation condition is satisfied, canceling the SL consistent LBT failure triggered by the resource block set includes:
canceling the SL consistent LBT failure triggered by the resource block set, in which a MAC entity is reset.

In combination with some embodiments of the third aspect, in some embodiments, the SL consistent LBT failure cancellation condition is satisfied, canceling the SL consistent LBT failure triggered by the resource block set includes:
canceling the SL consistent LBT failure triggered by the resource block set associated with any unicast connection, in which an SL functionality of a MAC entity for the any unicast connection is reset.

According to a fourth aspect, embodiments of the present disclosure provide a first apparatus for canceling an SL consistent LBT failure. The first apparatus includes a processing module, configured to cancel an SL consistent LBT failure triggered by a resource block set, in which an SL consistent LBT failure cancellation condition is satisfied.

According to a fifth aspect, embodiments of the present disclosure provide a second apparatus for canceling an SL consistent LBT failure. The second apparatus includes a sending module, configured to send a control instruction to a terminal, in which the control instruction is used by the terminal to determine that an SL consistent LBT failure cancellation condition is satisfied and to cancel an SL consistent LBT failure triggered by a resource block set.

According to a sixth aspect, embodiments of the present disclosure provide a communication device. The communication device includes one or more processors; and one or more memories for storing instructions. The processor is configured to call the instructions to enable the communication device to perform the method for canceling an SL consistent LBT failure as described in the first aspect and the second aspect, and optional implementations of the first aspect and the second aspect.

According to a seventh aspect, embodiments of the present disclosure provide a communication system. The communication system includes a terminal and a network device. The terminal is configured to implement the method as described in the first aspect and an optional implementation of the first aspect, and the network device is configured to implement the method as described in the second aspect and an optional implementation of the second aspect.

According to an eighth aspect, embodiments of the present disclosure provide a storage medium having instructions stored thereon. When the instructions are performed on a communication device, the communication device is caused to perform the method as described in any one of the first aspect, the optional implementation of the first aspect, the second aspect and the optional implementation of the second aspect.

According to a ninth aspect, embodiments of the present disclosure provide a program product which, when performed by a communication device, causes the communication device to perform the method as described in the first aspect, the optional implementation of the first aspect, the second aspect, or the optional implementation of the second aspect.

According to a tenth aspect, embodiments of the present disclosure provide a computer program which, when performed on a computer, causes the computer to perform the method as described in the first aspect, the optional implementation of the first aspect, the second aspect, or the optional implementation of the second aspect.

It is understandable that the first apparatus for canceling an SL consistent LBT failure, the second apparatus for canceling an SL consistent LBT failure, the communication device, the communication system, the storage medium, the program product, and the computer program are all configured to perform the method provided in the embodiments of the present disclosure. Therefore, for beneficial effects that may be achieved by them, reference may be made to the beneficial effects of the corresponding method, and details are not repeated herein.

Embodiments of the present disclosure provide a method and an apparatus for canceling an SL consistent LBT failure, a communication device, a communication system and a storage medium. In some embodiments, terms such as the method for canceling the SL consistent LBT failure, information processing method, and communication method, etc. may be replaced with each other, terms such as information transmission apparatus, information processing apparatus, communication apparatus, etc. may be replaced with each other, and terms such as information processing system, communication system, etc. may be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and respective steps may be arbitrarily combined. For example, a solution after removing some steps in a certain embodiment can also be implemented as an independent embodiment, and an order of the steps in a certain embodiment may be arbitrarily exchanged. In addition, optional implementations in a certain embodiment may be arbitrarily combined. In addition, respective embodiments may be arbitrarily combined with other, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, a noun after the article may be understood as a singular expression or a plural expression.

In embodiments of the present disclosure, "a plurality of" refers to two or more.

In some embodiments, the terms "at least one of", "one or more", "a plurality of", "multiple", etc. may be used interchangeably.

In some embodiments, the descriptions such as "at least one of A, B" "in one case, A; in another case, B", "in response to one case, A; in response to another case, B", etc. may include the following technical solutions according to situations: in some embodiments, A is executed, that is, A is executed independently of B; in some embodiments, B is executed, that is, B is executed independently of A; in some embodiments, one is selected from A and B to be executed, that is, A and B are selectively executed; in some embodiments, A and B are executed, that is, both A and B are executed. When there are more branches such as A, B, C, etc., the above is applicable.

In some embodiments, the descriptions such as "A or B" may include the following technical solutions according to situations: in some embodiments, A is executed, that is, A is executed independently of B; in some embodiments, B is executed, that is, B is executed independently of A; in some embodiments, one is selected from A and B to be executed, that is, A and B are selectively executed. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, terms such as "in response to ...", "in response to determining ...", "in a case of ...", "upon", "when", "if", "in case of", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names mentioned in the embodiments, and terms such as "apparatus", "equipment", "device", "circuit", "network element", "node", "function", "unit", "section", "system", "network", "chip", "chip system", "entity", and "subject" and the like may be used interchangeably.

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the present disclosure can also be applied to a structure in which communication between the access network device, the core network device, or the network device and the terminal is replaced by communication between multiple terminals (for example, also be referred to as device-to-device (D2D), vehicle-to-everything (V2X), etc.). In this case, the terminal can also be configured to have a structure that has all or part of the functions of the access network device. In addition, language such as "uplink" and "downlink" can also be replaced by the language corresponding to the communication between the terminals (for example, "side"). For example, an uplink channel, a downlink channel, etc. may be replaced by a side channel, and an uplink, a downlink, etc. may be replaced by a side link.

In some embodiments, the terminal may be replaced by the access network device, the core network device, or the network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

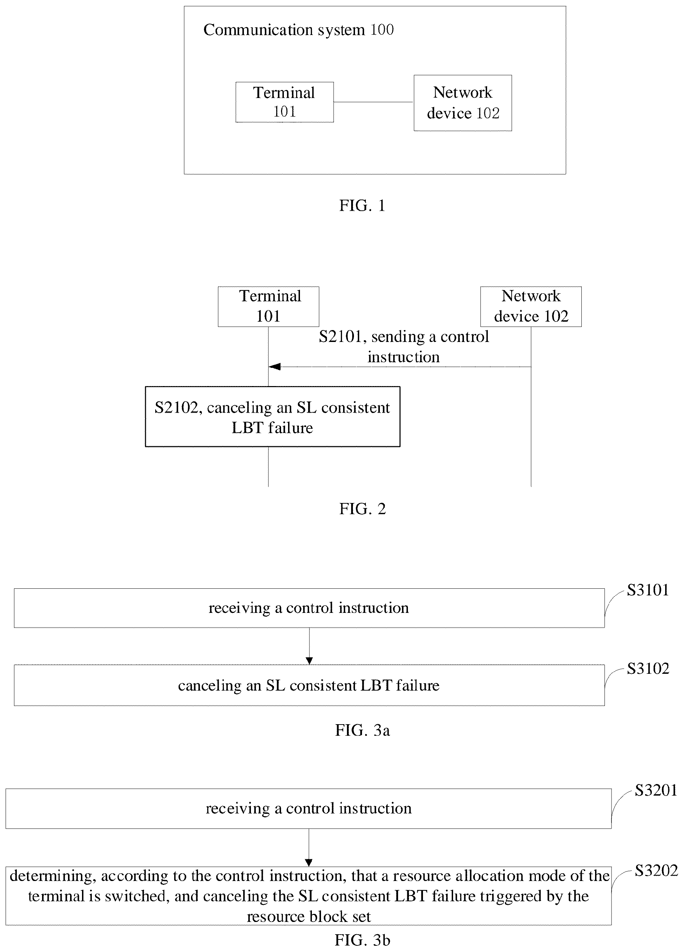

FIG. 1 is a schematic diagram illustrating an architecture of a communication system according to an embodiment of the disclosure. As shown in FIG. 1, the communication system 100 may include a terminal 101 and a network device 102. The network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be one device including one or more network elements, or may be a plurality of devices or a device group, each including all or part of the one or more network elements. The network element may be virtual or physical. The core network may include, for example, at least one of an evolved packet core (EPC), a 5G core network (5GCN), and a next generation core (NGC).

It may be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In order to support direct communication between terminals, an SL communication mode is introduced, and a communication interface between the terminals may be PC-5.

According to a correspondence between a sending terminal and a receiving terminal, three transmission modes, including unicast, multicast and broadcast, are supported on the SL. Illustratively, the sending terminal sends SL control information (Sidelink Control Information, SCI) on a PSCCH channel and sends a second-phase SCI on a PSSCH channel, such as a resource position carrying transmission data and source and target identifiers. Illustratively, for HARQ feedback-enabled data packets, the receiving terminal performs hybrid automatic repeat request-acknowledgement (HARQ-ACK) feedback on the PSSCH on the PSFCH channel.

In an example, the SL communication includes two transmitting resource allocation modes, one is a network dynamic scheduling mode (for example, a network scheduling mode), and the other is a mode in which the terminal autonomously selects from a resource pool configured or pre-configured by a network device (for example, a self-selection mode). The network scheduling mode refers to that the network device dynamically allocates the transmitting resource on the SL to the terminal based on cached data reported by the terminal, and the self-selection mode refers to that the terminal randomly selects the transmitting resource from the resource pool configured or pre-configured by the network device. In an example, the network device may configure for the terminal a plurality of resource pools on a BWP. Optionally, which resource allocation mode the terminal uses may be configured by the network device through radio resource control (RRC) signaling.

In some embodiments, pre-configure may be understood as define, predefine, store, pre-store, pre-negotiate, solidify, or pre-fire, etc.

In some embodiments, uplink and downlink operations may be performed in unlicensed bands. Channel access for both downlink and uplink relies on a LBT feature. A wireless device or a base station first "senses" a communication channel and detects that there is no communication before any transmission. When the communication channel is an unlicensed wideband carrier (e.g., hundreds of megahertz), a LBT procedure relies on detecting energy levels on a plurality of sub-bands of the communication channel. In an example, LBT parameters (such as type/duration, a clear channel assessment parameter, etc.) may be configured on the wireless device by the base station.

In some embodiments, terms such as "uplink", "up link", "physical uplink" may be interchangeable, and terms such as "downlink", "down link", "physical downlink" may be interchangeable.

In an example, the terminal may count the number of uplink LBT failures on each BWP. In an example, the network device configures a maximum number of consistent LBT failures (lbt-FailureInstanceMaxCount) and a consistent LBT failure detection timer (lbt-FailureDetectionTimer) for counting the consistent LBT failures for the terminal per serving cell (perservingcell) through RRC signaling (for example, lbt-FailureRecoveryConfig). The UE maintains an LBT_counter variable for each cell, and an initial value of the variable is 0. For each activated cell configured with lbt-FailureRecoveryConfig, when receiving an LBT failure indication submitted by a physical layer, the terminal starts or restarts lbt-FailureDetectionTimer, and LBT_counter increases by 1. When LBT_counter is greater than or equal to lbt-FailureInstanceMaxCount, an activated BWP on the cell triggers a consistent LBT failure. When lbt-FailureDetectionTimer expires or the higher layer reconfigures lbt-FailureInstanceMaxCount/lbt-FailureDetectionTimer or all consistent LBT failures on this serving cell are canceled, the UE resets LBT_counter to 0. When the terminal detects the consistent LBT failure on an activated BWP of a PCell (primary cell) or a PSCell (secondary cell), if there are other BWPs configured with a physical random access channel (PRACH) resource on the cell, the terminal triggers BWP switch, switches to the BWP configured with the PRACH resource and initiates a random access channel (RACH) procedure.

In an example, if the terminal detects consistent the LBT failures on N BWPs configured with the PRACH resources in the primary cell, the terminal initiates a radio link failure (RLF) recovery procedure. In an example, if the consistent LBT failure is detected on the activated BWP of the SCell, the terminal indicates an identifier of a cell where the consistent LBT failure happens to the network device through a media-access-control control element (MAC CE), and the MAC CE may carry identifiers of a plurality of cells where the consistent LBT failure is detected. The MAC CE is sent through other service cells where no consistent LBT failures have happened. In an example, if a MAC PDU including a consistent LBT failure MAC CE is sent successfully, the terminal may indicate cancellation of a consistent LBT failure status of the cell where the consistent LBT failures have happened through the consistent LBT failure MAC CE. In an example, if the consistent LBT failure is triggered on the PCell or the PSCell, and the RACH procedure is successfully completed, the terminal cancels the consistent LBT failure status of the PCell or PSCell. In an example, if the terminal receives a physical downlink control channel (PDCCH) indicating BWP switching of a certain serving cell, the consistent LBT failure state of this cell is cancelled.

SL communication may use unlicensed spectrum, and the terminal also needs to perform LBT when sending SL data on the unlicensed spectrum. A consistent LBT failure mechanism may also be applied to SL communication on the unlicensed spectrum. In some embodiments, terms such as "side", "sidelink", " side communication", "sidelink communication", "direct connection", "direct link", "direct communication", "direct link communication" and the like may be interchangeable.

In an example, a granularity of the SL consistent LBT failure may be a resource block set granularity, that is, the terminal counts whether the number of LBT failures on one resource block set reaches a preset number within a period of time, and determines whether the SL consistent LBT failure is triggered on this resource block set. However, a specific method of how to cancel a SL consistent LBT failure triggered by the resource block set has not been clarified.

Based on this, the present disclosure provides a method for canceling a SL consistent LBT failure.

Illustratively, in some embodiments, the method of the present disclosure may be applied to a sidelink-unlicensed (SL-U) scenario. For example, in some embodiments, the method of the present disclosure may be applied to an Internet of vehicles scenario.

FIG. 2 is a schematic diagram illustrating an interaction of a method for canceling an SL consistent LBT failure according to an embodiment of the disclosure. As shown in FIG. 2, an embodiment of the present disclosure relates to a method for canceling an SL consistent LBT failure, the method is configured in a communication system 100, and includes the following steps.

At step S2101, a network device sends a control instruction to a terminal.

In some embodiments, the terminal 101 may receive the control instruction.

In some embodiments, the control instruction may be an instruction for configuring or reconfiguring a resource allocation mode of the terminal, and the control instruction may include the resource allocation mode configured or reconfigured by the network device to the terminal. In an example, the control instruction may be a resource allocation mode configuration instruction, a resource allocation mode reconfiguration instruction, etc., and the name of the control instruction is not limited. Illustratively, the terminal 101 may be a terminal in an RRC connected state.

In some embodiments, the control instruction may be an instruction for reconfiguring a resource pool, that is, the control instruction is used to instruct to reconfigure the resource pool. Illustratively, the control instruction may be used to reconfigure one resource pool or to reconfigure a plurality of resource pools. Illustratively, the control instruction may be a resource pool reconfiguration signaling, a resource reconfiguration signaling, etc., and the name of the control instruction is not limited. Illustratively, the terminal 101 may be a terminal in an RRC connected state.

In some embodiments, the control instruction may be an instruction for instructing the network device to switch a resource pool scheduled for the terminal from a current resource pool to another resource pool. Illustratively, the name of the control instruction is not limited, for example, may be a resource pool switching instruction, etc. Illustratively, the resource allocation mode of the terminal 101 is a network scheduling mode.

In some embodiments, the control instruction may be at least one of an instruction for configuring or reconfiguring the resource allocation mode of the terminal, an instruction for reconfiguring the resource pool, and an instruction for instructing the network device to switch the resource pool scheduled for the terminal from the current resource pool to another resource pool.

In some embodiments, the control instruction may be RRC signaling, or other signaling such as downlink control information (DCI) signaling, physical downlink control channel (PDCCH) signaling, etc.

In some embodiments, "obtain", "acquire", "get", "receive", "transmit", "bidirectional transmission", "send and/or receive" may be interchangeable, and may be interpreted as receiving from other entities, obtaining from a protocol, obtaining from a high level, obtaining by self-processing, autonomous implementation, etc.

In some embodiments, in a case where the above control instruction is not involved in the optional embodiments of the subsequent steps, step S2101 may be omitted.

At step S2102, the terminal cancels an SL consecutive LBT failure.

In some embodiments, the terminal may cancel the SL consistent LBT failure triggered by the resource block set.

In some embodiments, the resource block set may be a resource block set that triggers the SL consistent LBT failure.

In some embodiments, the resource block set may be a resource block set that triggers the SL consistent LBT failure and does not cancel the SL consistent LBT failure.

In some embodiments, the terminal may cancel the SL consistent LBT failure triggered by the resource block set when an SL consistent LBT failure cancellation condition is satisfied.

In some embodiments, satisfying the SL consistent LBT failure cancellation condition includes at least one of: a resource allocation mode of the terminal being switched; a resource pool to which the resource block set belongs being reconfigured; a resource pool scheduled by a network device for the terminal being switched from a resource pool to which the resource block set belongs to another resource pool; a resource pool selected by the terminal being switched from a resource pool to which the resource block set belongs to another resource pool; a MAC entity being reset; or an SL functionality of the MAC entity for any unicast connection being reset.

In some embodiments, the resource allocation mode of the terminal is switched, for example, the resource allocation mode of the terminal is switched from a network scheduling mode to a self-selection mode, or the resource allocation mode of the terminal is switched from the self-selection mode to the network scheduling mode, etc. The name of the network scheduling mode is not limited, for example, may be a network dynamic scheduling mode, a mode one, a mode 1, etc., and the name of the self-selection mode is not limited, for example, may be a mode two, a mode 2, etc.

In some embodiments, the resource allocation mode of the terminal is the self-selection mode. In some embodiments, a resource pool selected by the terminal changes, and the resource pool selected by the terminal is switched from the current resource pool to another resource pool. If a resource block set being present in the current resource pool triggers the SL consistent LBT failure and does not cancel the SL consistent LBT failure, the SL consistent LBT failure triggered by the resource block set is canceled. In some embodiments, there may be one or more resource block sets that trigger the SL consistent LBT failure in the current resource pool. Illustratively, if there are a plurality of resource block sets in the current resource pool that trigger the SL consistent LBT failure and the SL consistent LBT failure is not canceled, the SL consistent LBT failure triggered by each of the plurality of resource block sets may be canceled.

In some embodiments, resetting the MAC entity may be understood as resetting all functions of the MAC entity. Illustratively, the terminal high-level request resetting the MAC entity, the terminal cancels the SL consistent LBT failures triggered by all of the resource block sets. Illustratively, the terminal high-level request resetting the MAC entity, the MAC entity cancels the SL consistent LBT failures triggered by all of the resource block sets, such as, the MAC entity may be an entity inside the terminal. In some embodiments, the terminal 101 may be a terminal with the resource allocation mode being the network scheduling mode or the self-selection mode. In some embodiments, the terminal 101 may be a terminal in an RRC connected state or an idle state or an inactive state. In some embodiments, the terminal 101 is a terminal out of courage (OOC).

In some embodiments, resetting an SL functionality of a MAC entity for any unicast connection may be understood as resetting a part of the functions of the MAC entity, and the part of the functions are functions related to the SL for the any unicast connection.

In some embodiments, resetting the SL functionality of the MAC entity for the any unicast connection may be understood as resetting an SL MAC reset for the any unicast connection.

In some embodiments, the SL functionality of the MAC entity for the any unicast connection is reset, and the SL consistent LBT failure triggered by the resource block set associated with the any unicast connection is canceled. Illustratively, the terminal 101 may be a terminal with the resource allocation mode being the network scheduling mode or the self-selection mode. Illustratively, the terminal 101 may be a terminal in an RRC connected state, an idle state, or an inactive state. Illustratively, the terminal 101 is a terminal in OOC.

In some embodiments, the unicast connection may be a PC5-RRC connection. Illustratively, a MAC layer receives an SL MAC reset request from a higher layer for the PC5-RRC connection, and the terminal cancels the SL consistent LBT failure triggered by the resource block set associated with the PC5-RRC connection. Illustratively, the MAC layer receives the SL MAC reset request from the higher layer for the PC5-RRC connection, and the MAC entity cancels the SL consistent LBT failure triggered by the resource block set associated with the PC5-RRC connection. For example, the MAC entity may be an entity inside the terminal.

In some embodiments, the resource block set associated with the any unicast connection may refer to a resource block set used by the unicast connection.

In some embodiments, the resource block set associated with the any unicast connection may be a resource block set used by at least one of a PSSCH, a PSCCH, or a PSFCH associated with the any unicast connection. Illustratively, if the resource block set associated with the any unicast connection triggers the SL consistent LBT failure, the SL consistent LBT failure triggered by the resource block set is canceled. Illustratively, if the resource block set associated with the any unicast connection triggers the SL consistent LBT failure and the SL consistent LBT failure is not canceled, the SL consistent LBT failure triggered by the resource block set is canceled.

In some embodiments, terms such as "certain", "predetermined", "preset", "set", "indicated", "specific", "arbitrary", "any", "first", etc. can be interchangeable, and "certain A", "predetermined A", "preset A", "set A", "indicated A", "specific A", "arbitrary A", "any A", "first A" may be interpreted as A pre-defined in a protocol, etc., or as A obtained through setting, configuration, or indication, etc., and may also be interpreted as certain A, specific A, arbitrary A, any A or first A, etc., which are not limited herein.

In some embodiments, the MAC entity is reset and an SL consistent LBT failure report procedure is canceled. In some embodiments, the terminal 101 may be a terminal with the resource allocation mode being the network scheduling mode, or may be the terminal in the RRC connected state with the resource allocation mode being the self-selection mode.

In some embodiments, the MAC entity is reset and the SL consistent LBT failure report procedure is canceled.

In some embodiments, canceling the SL consistent LBT failure report procedure can be understood as canceling an SL consistent LBT failure reporting procedure.

In some embodiments, the MAC entity is reset and canceling the SL consistent LBT failure report procedure may include at least one of: canceling generation of a first report in a case where the first report is being generated; or canceling sending or resending a first report to a network device in a case where the first report has been generated. The first report is used to indicate to a network device information of the resource block set that triggers the SL consistent LBT failure.

In some embodiments, the name of the first report is not limited, such as an SL consistent LBT failure report, an SL consistent LBT failure MAC CE, etc.

Illustratively, the terminal high-layer requests resetting the MAC entity, and the MAC entity cancels the SL consistent LBT failure report procedure. For example, canceling the SL consistent LBT failure report procedure may include at least one of: if the SL consistent LBT failure MAC CE is being generated, canceling generation of the SL consistent LBT failure MAC CE; if the SL consistent LBT failure MAC CE has been generated, sending or resending of the SL consistent LBT failure MAC CE is canceled.

In some embodiments, the terminal may determine, according to the control instruction sent by the network device, that the SL consistent LBT failure cancellation condition is satisfied, and to cancel the SL consistent LBT failure triggered by the resource block set.

In some embodiments, the control instruction is used to configure or reconfigure the resource allocation mode of the terminal. If the resource allocation mode configured or reconfigured by the control instruction for the terminal is inconsistent with a current resource allocation mode of the terminal, it may be determined that the resource allocation mode of the terminal is switched, and the SL consistent LBT failure triggered by the resource block set may be canceled.

Illustratively, the resource allocation mode of the terminal is the network scheduling mode, and the network device may configure or reconfigure for the terminal the resource allocation mode to be the self-selection mode through the control instruction. The terminal determines, according to the control instruction, that the resource allocation mode is switched from the network scheduling mode to the self-selection mode. If a resource block set being present in a resource pool scheduled by the network device triggers the SL consistent LBT failure, the SL consistent LBT failure triggered by the resource block set is canceled.

Illustratively, the terminal determines, based on the control instruction, that the resource allocation mode of the terminal is switched from the network scheduling mode to the self-selection mode. If the resource block set being present in the resource pool scheduled by the network device triggers the SL consistent LBT failure and the SL consistent LBT failure is not canceled, the SL consistent LBT failure triggered by the resource block set is canceled.

In an example, there may be one or more resource pools scheduled by the network device. There may be one or more resource block sets that triggers the SL consistent LBT failure in one resource pool. Illustratively, a plurality of resource block sets being present in the resource pool scheduled by the network device trigger the SL consistent LBT failure, and the SL consistent LBT failure triggered by each of the plurality of resource block sets may be canceled. Illustratively, the plurality of resource block sets being present in the resource pool scheduled by the network device trigger the SL consistent LBT failure and the SL consistent LBT failure is not canceled, and the SL consistent LBT failure triggered by each of the plurality of resource block sets may be canceled.

In some embodiments, the resource allocation mode of the terminal is switched from the network scheduling mode to the self-selection mode, which may be understood as the resource allocation mode of the terminal is configured or reconfigured from the network scheduling mode to the self-selection mode.

Illustratively, the resource allocation mode of the terminal is the self-selection mode, and the network device may configure or reconfigure the resource allocation mode of the terminal to be the network scheduling mode through the control instruction. The terminal determines, according to the control instruction, that the resource allocation mode of the terminal is switched from the self-selection mode to the network scheduling mode. If a resource block set being present in a resource pool selected by the terminal triggers the SL consistent LBT failure, the SL consistent LBT failure triggered by the resource block set is canceled.

Illustratively, the terminal determines, according to the control instruction, that the resource allocation mode of the terminal is switched from the self-selection mode to the network scheduling mode. If the resource block set in the resource pool selected by the terminal triggers the SL consistent LBT failure and the SL consistent LBT failure is not canceled, and the SL consistent LBT failure triggered by the resource block set is canceled.

In an example, there may be one or more resource pools selected by the terminal, and there may be one or more resource block sets that triggers the SL consistent LBT failure in the resource pool selected by the terminal. Illustratively, a plurality of resource block sets being present in the resource pool selected by the terminal trigger the SL consistent LBT failure, the SL consistent LBT failure triggered by each of the plurality of resource block sets may be canceled. Illustratively, the plurality of resource block sets being present in the resource pool selected by the terminal trigger the SL consistent LBT failure and the SL consistent LBT failure is not canceled, the SL consistent LBT failure triggered by each of the plurality of resource block sets may be canceled.

In some embodiments, the resource allocation mode of the terminal is switched from the self-selection mode to the network scheduling mode, which may be understood as the resource allocation mode of the terminal is configured or reconfigured from the self-selection mode to the network scheduling mode.

In some embodiments, the terminal receives the control instruction for reconfiguring the resource pool, and if the resource block set being present in the resource pool reconfigured triggers the SL consistent LBT failure, the SL consistent LBT failure triggered by the resource block set is canceled.

In some embodiments, the terminal receives a control instruction for reconfiguring the resource pool. If the resource block set being present in the reconfigured resource pool triggers the SL consistent LBT failure and the SL consistent LBT failure is not canceled, the SL consistent LBT failure triggered by the resource block set is canceled.

In some embodiments, there may be one or more resource block sets that trigger the SL consistent LBT failure in the reconfigured resource pool. Illustratively, a plurality of resource block sets being present in the reconfigured resource pool trigger the SL consistent LBT failure, and the SL consistent LBT failure triggered by each of the plurality of resource block sets may be canceled. Illustratively, the plurality of resource block sets in the reconfigured resource pool trigger the SL consistent LBT failure and the SL consistent LBT failure is not canceled, and the SL consistent LBT failure triggered by each of the plurality of resource block sets may be canceled.

In some embodiments, the control instruction is used to instruct the network device to switch a resource pool scheduled for the terminal from a current resource pool to another resource pool. The terminal determines, based on the control instruction, that the resource pool scheduled for the terminal by the network device is switched from the current resource pool to another resource pool. If the resource block set being present in the current resource pool triggers the SL consistent LBT failure, the SL consistent LBT failure triggered by the resource block set is canceled.

In some embodiments, the control instruction is used to instruct the network device to switch a resource pool scheduled for the terminal from a current resource pool to another resource pool. The terminal determines, based on the control instruction, that the resource pool scheduled for the terminal by the network device is switched from the current resource pool to another resource pool. If the resource block set being present in the current resource pool triggers the SL consistent LBT failure and the SL consistent LBT failure is not canceled, the SL consistent LBT failure triggered by the resource block set is canceled.

In some embodiments, there may be one or more resource block sets that trigger the SL consistent LBT failure in the current resource pool. Illustratively, a plurality of resource block sets being present in the current resource pool trigger the SL consistent LBT failure, and the SL consistent LBT failure triggered by each of the plurality of resource block sets may be canceled. Illustratively, the plurality of resource block sets being present in the current resource pool trigger the SL consistent LBT failure and the SL consistent LBT failure is not canceled, and the SL consistent LBT failure triggered by each of the plurality of resource block sets may be canceled.

In some embodiments, the method disclosed herein may be applied to an SL-U scenario, and may also be applied to scenarios in other fields such as licensed spectrum where the problem of "how a terminal cancels an SL consistent LBT failure triggered by a resource block set" needs to be addressed.

The embodiments of the present disclosure list a variety of SL consistent LBT failure cancellation conditions, which are respectively configured by the network side, or configured by the high-level, or selected by the terminal, etc., which are not limited in the disclosure. These conditions may also be determined by at least one of: specified by a protocol, configured by the network device, determined by the terminal, configured by the high-level, configured by other entities, etc.

The method for canceling the SL consistent LBT failure involved in the embodiments of the present disclosure may include at least one of step S2101 to step S2102. For example, step S2101 may be implemented as an independent embodiment, step S2102 may be implemented as an independent embodiment, and step S2101+S2102 may be implemented as an independent embodiment, which are not limited herein.

In this implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

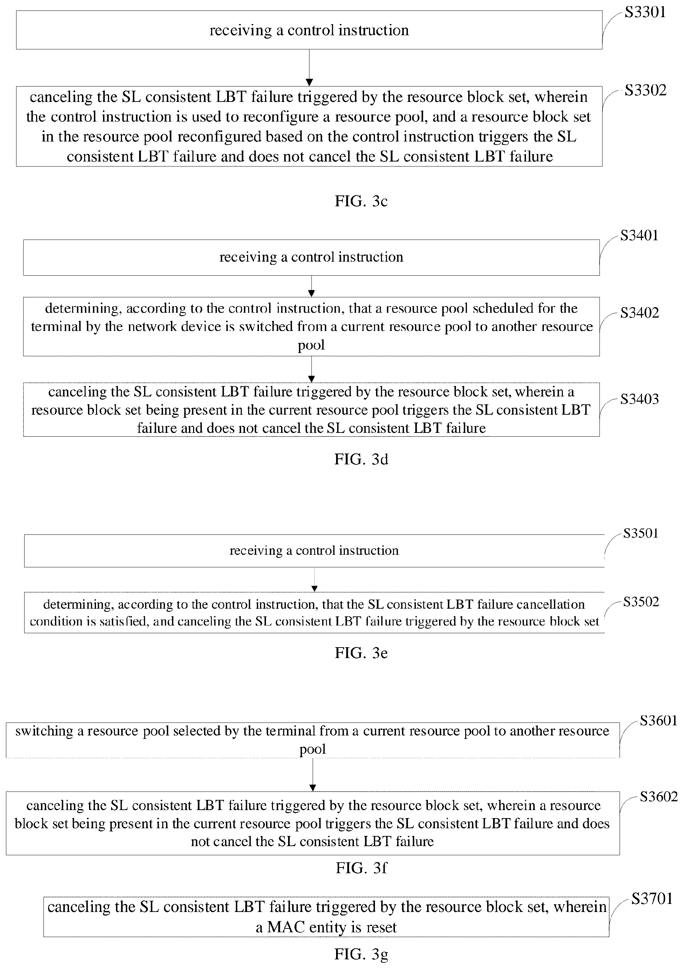

FIG. 3a is a flowchart illustrating a method for canceling an SL consistent LBT failure according to an embodiment of the disclosure. As shown in FIG. 3a, an embodiment of the present disclosure relates to the method for canceling the SL consistent LBT failure. The method is performed by a terminal 101, and includes the following steps.

At step S3101, a control instruction is received.

In some embodiments, the terminal 101 may receive the control instruction sent by a network device.

At step S3102, an SL consistent LBT failure is canceled.

For a detailed introduction of steps S3101-S3102, reference may be made to the embodiment of FIG. 2.

The method for canceling the SL consistent LBT failure involved in the embodiment of the present disclosure may include at least one of step S3101 to step S3102. For example, step S3101 may be implemented as an independent embodiment, step S3102 may be implemented as an independent embodiment, and step S3101 +step S3102 may be implemented as independent embodiments, which are not limited herein.

FIG. 3b is a flowchart illustrating a method for canceling an SL consistent LBT failure according to an embodiment of the disclosure. As shown in FIG. 3b, an embodiment of the present disclosure relates to the method for canceling the SL consistent LBT failure. The method is performed by a terminal 101, and includes the following steps.

At step S3201, a control instruction is received.

In some embodiments, the terminal may receive the control instruction sent by a network device.

In some embodiments, the control instruction may be an instruction for configuring or reconfiguring a resource allocation mode of the terminal.

In some embodiments, the name of the control instruction is not limited, for example, may be a resource allocation mode configuration instruction, a resource allocation mode reconfiguration instruction, etc.

At step S3202, it is determined, according to the control instruction, that the resource allocation mode of the terminal is switched, and the SL consistent LBT failure triggered by the resource block set is cancelled.

In some embodiments, the terminal may determine, based on the control instruction, that the resource allocation mode of the terminal has switched, and if there is a resource block set that triggers the SL consistent LBT failure, the SL consistent LBT failure triggered by the resource block set is cancelled.

In some embodiments, there may be one or more resource block sets that trigger the SL consistent LBT failure. Illustratively, if there are a plurality of resource block sets that trigger the SL consistent LBT failure and the SL consistent LBT failure is not cancelled, the SL consistent LBT failure triggered by each of the plurality of resource block sets may be cancelled.

For a detailed introduction of steps S3201-S3202, reference may be made to the embodiment of FIG. 2.

The method for canceling the SL consistent LBT failure involved in the embodiments of the present disclosure may include at least one of step S3201 to step S3202. For example, step S3201 may be implemented as an independent embodiment, step S3202 may be implemented as an independent embodiment, and step S3201+step S3202 may be implemented as an independent embodiment, which are not limited herein.

In this implementation or embodiment, unless there is any contradiction, each step may be independent, arbitrarily combined or exchanged in order, the optional implementations or optional examples may be arbitrarily combined.

FIG. 3c is a flowchart illustrating a method for canceling an SL consistent LBT failure according to an embodiment of the disclosure. As shown in FIG. 3c, an embodiment of the present disclosure relates to the method for canceling the SL consistent LBT failure. The method is performed by a terminal 101, and includes the following steps.

At step S3301, a control instruction is received.

In some embodiments, the terminal may receive the control instruction sent by a network device.

In some embodiments, the control instruction may be used to reconfigure a resource pool.

In some embodiments, the name of the control instruction is not limited, for example, may be resource pool reconfiguration signaling or resource reconfiguration signaling.

At step S3302, a resource block set being present in a resource pool reconfigured by the control instruction triggers an SL consistent LBT failure and the SL consistent LBT failure is not cancelled, the SL consistent LBT failure triggered by the resource block set is cancelled.

In some embodiments, the terminal receives a control instruction for reconfiguring the resource pool. If the resource block set being present in the reconfigured resource pool triggers the SL consistent LBT failure and the SL consistent LBT failure is not canceled, the SL consistent LBT failure triggered by the resource block set is canceled.

In some embodiments, there may be one or more resource block sets that trigger the SL consistent LBT failure in the reconfigured resource pool. Illustratively, a plurality of resource block sets being present in the reconfigured resource pool trigger the SL consistent LBT failure and the SL consistent LBT failure is not canceled, and the SL consistent LBT failure triggered by each of the plurality of resource block sets may be canceled.

For a detailed introduction of steps S3301-S3302, reference may be made to the embodiment of FIG. 2.

The method for canceling the SL consistent LBT failure involved in the embodiments of the present disclosure may include at least one of step S3301 to step S3302. For example, step S3301 may be implemented as an independent embodiment, step S3302 may be implemented as an independent embodiment, and step S3301+step S3302 may be implemented as an independent embodiment, which are not limited herein.

In this implementation or embodiment, unless there is any contradiction, each step may be independent, arbitrarily combined or exchanged in order, the optional implementations or optional examples may be arbitrarily combined.

FIG. 3d is a flowchart illustrating a method for canceling an SL consistent LBT failure according to an embodiment of the disclosure. As shown in FIG. 3d, an embodiment of the present disclosure relates to the method for canceling the SL consistent LBT failure. The method is performed by a terminal 101, and includes the following steps.

At step S3401, a control instruction is received.

In some embodiments, the terminal 101 may receive the control instruction sent by a network device.

At step S3402, it is determined, according to the control instruction, that a resource pool scheduled by the network device for the terminal is switched from a current resource pool to another resource pool.

At step S3403, a resource block set being present in the current resource pool triggers an SL consistent LBT failure and the SL consistent LBT failure is not cancelled, the SL consistent LBT failure triggered by the resource block set is cancelled.

In some embodiments, there may be one or more resource block sets that trigger the SL consistent LBT failure in the current resource pool. Illustratively, a plurality of resource block sets being present in the current resource pool trigger the SL consistent LBT failure and the SL consistent LBT failure is not canceled, and the SL consistent LBT failure triggered by each of the plurality of resource block sets may be canceled.

For a detailed introduction of steps S3401-S3402, reference may be made to the embodiment of FIG. 2.

The method for canceling the SL consistent LBT failure involved in the embodiments of the present disclosure may include at least one of step S3401 to step S3403. For example, step S3401 may be implemented as an independent embodiment, step S3402 may be implemented as an independent embodiment, step S3403 may be implemented as an independent embodiment, step S3401+step S3402 may be implemented as an independent embodiment and step S3401+step S3402+step S3403 may be implemented as an independent embodiment, which are not limited herein.

In this implementation or embodiment, unless there is any contradiction, each step may be independent, arbitrarily combined or exchanged in order, the optional implementations or optional examples may be arbitrarily combined.

FIG. 3e is a flowchart illustrating a method for canceling an SL consistent LBT failure according to an embodiment of the disclosure. As shown in FIG. 3e, an embodiment of the present disclosure relates to the method for canceling the SL consistent LBT failure. The method is performed by a terminal 101, and includes the following steps.

At step S3501, a control instruction is received.

In some embodiments, the terminal may receive the control instruction sent by a network device.

At step S3502, it is determined, according to the control instruction, that an SL consistent LBT failure cancellation condition is satisfied, and an SL consistent LBT failure triggered by a resource block set is canceled.

In some embodiments, there may be one or more resource block sets that trigger the SL consistent LBT failure. Illustratively, a plurality of resource block sets are present to trigger the SL consistent LBT failure and the SL consistent LBT failure is not cancelled, the SL consistent LBT failure triggered by each of the plurality of resource block sets may be cancelled.

For a detailed introduction of steps S3501-S3502, reference may be made to the embodiment of FIG. 2.

The method for canceling the SL consistent LBT failure involved in the embodiments of the present disclosure may include at least one of step S3501 to step S3502. For example, step S3501 may be implemented as an independent embodiment, step S3502 may be implemented as an independent embodiment, and step S3501+step S3502 may be implemented as an independent embodiment, which are not limited herein.

In this implementation or embodiment, unless there is any contradiction, each step may be independent, arbitrarily combined or exchanged in order, the optional implementations or optional examples may be arbitrarily combined.

FIG. 3f is a flowchart illustrating a method for canceling an SL consistent LBT failure according to an embodiment of the disclosure. As shown in FIG. 3f, an embodiment of the present disclosure relates to the method for canceling the SL consistent LBT failure. The method is performed by a terminal 101, and includes the following steps.

At step S3601, a resource pool selected by the terminal is switched from a current resource pool to another resource pool.

In some embodiments, a resource allocation mode of the terminal is a self-selection mode.

In some embodiments, the resource pool selected by the terminal changes, and the resource pool selected by the terminal is switched from the current resource pool to another resource pool.

At step S3602, a resource block set being present in the current resource pool triggers an SL consistent LBT failure and the SL consistent LBT failure is not canceled, and the SL consistent LBT failure triggered by a resource block set is canceled.

In some embodiments, if the resource block set being present in the current resource pool triggers the SL consistent LBT failure and the SL consistent LBT failure is not canceled, the SL consistent LBT failure triggered by the resource block set is canceled.

In some embodiments, there may be one or more resource block sets that trigger the SL consistent LBT failure in the current resource pool. Illustratively, a plurality of resource block sets being present in the current resource pool trigger the SL consistent LBT failure and the SL consistent LBT failure is not cancelled, the SL consistent LBT failure triggered by each of the plurality of resource block sets may be cancelled.

For a detailed introduction of steps S3601-S3602, reference may be made to the embodiment of FIG. 2.

The method for canceling the SL consistent LBT failure involved in the embodiments of the present disclosure may include at least one of step S3601 to step S3602. For example, step S3601 may be implemented as an independent embodiment, step S3602 may be implemented as an independent embodiment, and step S3601+step S3602 may be implemented as an independent embodiment, which are not limited herein.

In this implementation or embodiment, unless there is any contradiction, each step may be independent, arbitrarily combined or exchanged in order, the optional implementations or optional examples may be arbitrarily combined.

FIG. 3f is a flowchart illustrating a method for canceling an SL consistent LBT failure according to an embodiment of the disclosure. As shown in FIG. 3f, an embodiment of the present disclosure relates to the method for canceling the SL consistent LBT failure. The method is performed by a terminal 101, and includes the following step.

At step S3701, a MAC entity is reset, and an SL consistent LBT failure triggered by a resource block set is cancelled.

In some embodiments, resetting the MAC entity may be understood as resetting all functions of the MAC entity.

In some embodiments, if the MAC entity is reset, the SL consistent LBT failure triggered by the resource block set may be cancelled. In an example, the resource block set is a resource block set in a configured resource pool that triggers the SL consistent LBT failure and does not cancel the SL consistent LBT failure.

Illustratively, the terminal high-level request resetting the MAC entity, the terminal cancels the SL consistent LBT failures triggered by all of the resource block sets.

Illustratively, the terminal high-level request resetting the MAC entity, the MAC entity cancels the SL consistent LBT failures triggered by all of the resource block sets, such as, the MAC entity may be an entity inside the terminal. In an example, the resource block set is a resource block set that triggers the SL consistent LBT failure and does not cancel the SL consistent LBT failure.

In some embodiments, the terminal 101 may be a terminal with the resource allocation mode being the network scheduling mode or the self-selection mode.

In some embodiments, the terminal 101 may be a terminal in an RRC connected state or an idle state or an inactive state.

In some embodiments, the terminal 101 is a terminal out of courage (OOC).

For a detailed introduction of step S3701, reference may be made to the embodiment of FIG. 2.

In this implementation or embodiment, unless there is any contradiction, the optional implementations or optional examples may be arbitrarily combined.

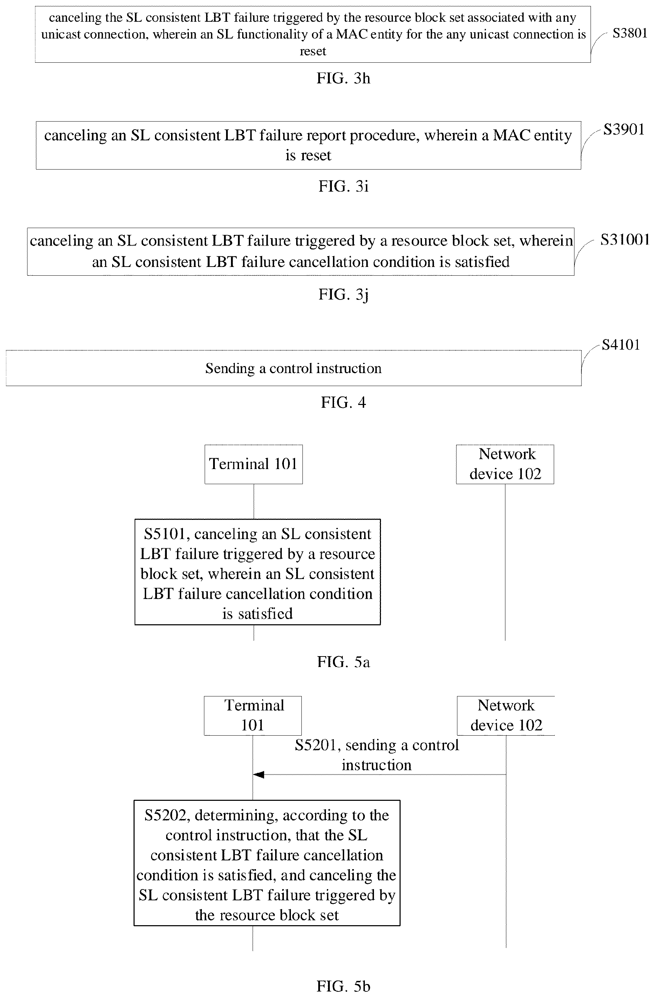

FIG. 3h is a flowchart illustrating a method for canceling an SL consistent LBT failure according to an embodiment of the disclosure. As shown in FIG. 3h, an embodiment of the present disclosure relates to the method for canceling the SL consistent LBT failure. The method is performed by a terminal 101, and includes the following step.

At step S3801, an SL functionality of a MAC entity for any unicast connection is reset, and an SL consistent LBT failure triggered by a resource block set associated with the any unicast connection is canceled.

In some embodiments, resetting an SL functionality of a MAC entity for any unicast connection may be understood as resetting a part of the functions of the MAC entity, and the part of the functions are functions related to the SL for the any unicast connection.

In some embodiments, resetting the SL functionality of the MAC entity for the any unicast connection may be understood as resetting an SL MAC reset for the any unicast connection.

In some embodiments, the unicast connection may be a PC5-RRC connection. Illustratively, a MAC layer receives an SL MAC reset request from a higher layer for the PC5-RRC connection, and the terminal cancels the SL consistent LBT failure triggered by the resource block set associated with the PC5-RRC connection. Illustratively, the MAC layer receives the SL MAC reset request from the higher layer for the PC5-RRC connection, and the MAC entity cancels the SL consistent LBT failure triggered by the resource block set associated with the PC5-RRC connection. For example, the MAC entity may be an entity inside the terminal.

In some embodiments, the resource block set associated with the any unicast connection may refer to a resource block set used by the unicast connection.

In some embodiments, the resource block set associated with the any unicast connection may be a resource block set used by at least one of a PSSCH, a PSCCH, or a PSFCH associated with the any unicast connection. Illustratively, if the resource block set associated with the any unicast connection triggers the SL consistent LBT failure and the SL consistent LBT failure is not canceled, the SL consistent LBT failure triggered by the resource block set is canceled.

In some embodiments, the terminal 101 may be a terminal with a resource allocation mode being a network scheduling mode or a self-selection mode.

In some embodiments, the terminal 101 may be a terminal in an RRC connected state or an idle state or an inactive state.

In some embodiments, the terminal 101 is a terminal in OOC.

For a detailed introduction of step S3801, reference may be made to the embodiment of FIG. 2.

In this implementation or embodiment, unless there is any contradiction, the optional implementations or optional examples may be arbitrarily combined.

FIG. 3i is a flowchart illustrating a method for canceling an SL consistent LBT failure according to an embodiment of the disclosure. As shown in FIG. 3i, an embodiment of the present disclosure relates to the method for canceling the SL consistent LBT failure. The method is performed by a terminal 101, and includes the following step.

At step S3901, a MAC entity is reset, an SL consistent LBT failure report procedure is canceled.

In some embodiments, canceling the SL consistent LBT failure report procedure can be understood as canceling an SL consistent LBT failure reporting procedure.

Illustratively, canceling the SL consistent LBT failure report procedure may include at least one of: canceling generation of a first report in a case where the first report is being generated; or canceling sending or resending a first report to a network device in a case where the first report has been generated. The first report is used to indicate to a network device information of the resource block set that triggers the SL consistent LBT failure. Illustratively, the first report may be an SL consistent LBT failure MAC CE.

In some embodiments, the name of the first report is not limited, such as an SL consistent LBT failure report, an SL consistent LBT failure MAC CE, etc.

Illustratively, the terminal high-layer requests resetting the MAC entity, and the MAC entity cancels the SL consistent LBT failure report procedure. For example, canceling the SL consistent LBT failure report procedure may include at least one of: if the SL consistent LBT failure MAC CE is being generated, canceling generation of the SL consistent LBT failure MAC CE; if the SL consistent LBT failure MAC CE has been generated, sending or resending of the SL consistent LBT failure MAC CE is canceled.

In some embodiments, the terminal 101 may be a terminal with a resource allocation mode being a network scheduling mode, or may be a terminal in an RRC connected state and with the resource allocation mode being a self-selection mode.

For a detailed introduction of step S3901, reference may be made to the embodiment of FIG. 2.

In this implementation or embodiment, unless there is any contradiction, the optional implementations or optional examples may be arbitrarily combined.

FIG. 3j is a flowchart illustrating a method for canceling an SL consistent LBT failure according to an embodiment of the disclosure. As shown in FIG. 3j, an embodiment of the present disclosure relates to the method for canceling the SL consistent LBT failure. The method is performed by a terminal 101, and includes the following step.

At step S31001, an SL consistent LBT failure cancellation condition is satisfied, and an SL consistent LBT failure triggered by a resource block set is canceled.

In some embodiments, satisfying the SL consistent LBT failure cancellation condition includes at least one of:
a resource allocation mode of the terminal being switched;
a resource pool to which the resource block set belongs being reconfigured;
a resource pool scheduled by a network device for the terminal being switched from a resource pool to which the resource block set belongs to another resource pool;
a resource pool selected by the terminal being switched from a resource pool to which the resource block set belongs to another resource pool;
a medium access control (MAC) entity being reset; or
an SL functionality of the MAC entity for any unicast connection being reset.

In some embodiments, the SL consistent LBT failure cancellation condition is satisfied, canceling the SL consistent LBT failure triggered by the resource block set includes:
receiving a control instruction sent by a network device; and
determining, according to the control instruction, that the SL consistent LBT failure cancellation condition is satisfied, and canceling the SL consistent LBT failure triggered by the resource block set.

In some embodiments, determining, according to the control instruction, that the SL consistent LBT failure cancellation condition is satisfied, and canceling the SL consistent LBT failure triggered by the resource block set includes:
determining, according to the control instruction, that a resource allocation mode of the terminal is switched, and canceling the SL consistent LBT failure triggered by the resource block set, in which the control instruction is used to configure or reconfigure the resource allocation mode of the terminal.

In some embodiments, determining, according to the control instruction, that the resource allocation mode of the terminal is switched, and canceling the SL consistent LBT failure triggered by the resource block set includes:
determining, according to the control instruction, that the resource allocation mode of the terminal is switched from a network scheduling mode to a self-selection mode; and
canceling the SL consistent LBT failure triggered by the resource block set, in which a resource block set in a resource pool scheduled by the network device triggers the SL consistent LBT failure and does not cancel the SL consistent LBT failure.

In some embodiments, determining, according to the control instruction, that the resource allocation mode of the terminal is switched, and canceling the SL consistent LBT failure triggered by the resource block set includes:
determining, according to the control instruction, that the resource allocation mode of the terminal is switched from a self-selection mode to a network scheduling mode; and
canceling the SL consistent LBT failure triggered by the resource block set, in which a resource block set in a resource pool selected by the terminal triggers the SL consistent LBT failure and does not cancel the SL consistent LBT failure. \

In some embodiments, determining, according to the control instruction, that the SL consistent LBT failure cancellation condition is satisfied, and canceling the SL consistent LBT failure triggered by the resource block set includes:
canceling the SL consistent LBT failure triggered by the resource block set, in which the control instruction is used to reconfigure a resource pool, and a resource block set in the resource pool reconfigured triggers the SL consistent LBT failure and does not cancel the SL consistent LBT failure.

In some embodiments, determining, according to the control instruction, that the SL consistent LBT failure cancellation condition is satisfied, and canceling the SL consistent LBT failure triggered by the resource block set includes:
canceling the SL consistent LBT failure triggered by the resource block set, in which the control instruction is used to instruct the network device to switch a resource pool scheduled for the terminal from a current resource pool to another resource pool, and a resource block set being present in the current resource pool triggers the SL consistent LBT failure and does not cancel the SL consistent LBT failure.

In some embodiments, the SL consistent LBT failure cancellation condition is satisfied, canceling the SL consistent LBT failure triggered by the resource block set includes:
switching a resource pool selected by the terminal from a current resource pool to another resource pool;
canceling the SL consistent LBT failure triggered by the resource block set, wherein a resource block set being present in the current resource pool triggers the SL consistent LBT failure and does not cancel the SL consistent LBT failure.

In some embodiments, the SL consistent LBT failure cancellation condition is satisfied, canceling the SL consistent LBT failure triggered by the resource block set includes:
canceling the SL consistent LBT failure triggered by the resource block set, in which a MAC entity is reset.

In some embodiments, the resource block set is a resource block set in a configured resource pool that triggers the SL consistent LBT failure and does not cancel the SL consistent LBT failure.

In some embodiments, the SL consistent LBT failure cancellation condition is satisfied, canceling the SL consistent LBT failure triggered by the resource block set includes:
canceling the SL consistent LBT failure triggered by the resource block set associated with any unicast connection, in which an SL functionality of a MAC entity for the any unicast connection is reset.

In some embodiments, the resource block set associated with the any unicast connection is a resource block set used by at least one of a physical sidelink shared channel (PSSCH), a physical sidelink control channel (PSCCH), or a physical sidelink feedback channel (PSFCH) associated with the any unicast connection.

In some embodiments, the method further includes:
canceling an SL consistent LBT failure report procedure, in which a MAC entity is reset.

In some embodiments, canceling the SL consistent LBT failure report procedure includes at least one of:
canceling generation of a first report in a case where the first report is being generated, wherein the first report is used to indicate to a network device information of the resource block set that triggers the SL consistent LBT failure; or
canceling sending or resending a first report to a network device in a case where the first report has been generated.

In some embodiments, an optional implementation of step S31001 may include methods in any one or several of the embodiments of FIG. 3a-FIG. 3i above.

For a detailed introduction of step S31001, reference may be made to the embodiments of FIG. 2 and FIGs. 3a to 3i.

In this implementation or embodiment, unless there is any contradiction, each step may be independent, arbitrarily combined or exchanged in order, the optional implementations or optional examples may be arbitrarily combined.

FIG. 4 is a flowchart illustrating a method for canceling an SL consistent LBT failure according to an embodiment of the disclosure. As shown in FIG. 4, an embodiment of the present disclosure relates to the method for canceling the SL consistent LBT failure. The method is performed by a network device 102, and includes the following step.

At step S4101, a control instruction is sent.

In some embodiments, the network device may send the control instruction to a terminal.

In some embodiments, the control instruction is used by the terminal to determine that an SL consistent LBT failure cancellation condition is satisfied and to cancel an SL consistent LBT failure triggered by a resource block set.

In some embodiments, satisfying the SL consistent LBT failure cancellation condition includes at least one of:
a resource allocation mode of the terminal being switched;
a resource pool to which the resource block set belongs being reconfigured; or
a resource pool scheduled by the network device for the terminal being switched from a resource pool to which the resource block set belongs to another resource pool.

For a detailed introduction of step S4101, reference may be made to the embodiments of FIG. 2.

In some embodiments, the terms such as "send", "transmit", "report", "issue", "transmission", "bi-directionally transmit", "send and/or receive" and the like may be used interchangeably.

In this implementation or example, optional implementations or optional examples may be arbitrarily combined.

FIG. 5a is a flowchart illustrating a method for canceling an SL consistent LBT failure according to an embodiment of the present disclosure. As shown in FIG. 5a, this embodiment of the present disclosure relates to the method for canceling the SL consistent LBT failure. The method is configured in a communication system 100 including a terminal 101 and a network device 102. The method includes the following step.

At step S5101, the terminal cancels an SL consistent LBT failure triggered by a resource block set, in which an SL consistent LBT failure cancellation condition is satisfied.

For the optional implementation of step S5101, reference may made to the above step S2102, steps in any one or more embodiments in the embodiments of FIG. 4, and other related parts of the embodiments involved in FIG. 2 and FIG. 4. Details are not repeated herein.

FIG. 5b is a flowchart illustrating a method for canceling an SL consistent LBT failure according to an embodiment of the present disclosure. As shown in FIG. 5b, this embodiment of the present disclosure relates to the method for canceling the SL consistent LBT failure. The method is configured in a communication system 100 including a terminal 101 and a network device 102. The method includes the following steps.

At step S5201, the network device sends a control instruction to the terminal.

At step S5202, the terminal determines, according to the control instruction, that the SL consistent LBT failure cancellation condition is satisfied, and cancels the SL consistent LBT failure triggered by the resource block set.

For the optional implementation of step S5201, reference may made to the above step S2101, steps in any one or more embodiments in the embodiments of FIG. 4, and other related parts of the embodiments involved in FIG. 2 and FIG. 4. Details are not repeated herein.

For the optional implementation of step S5202, reference may made to the above step S2102, steps in any one or more embodiments in the embodiments of FIGs. 3a to 3d, and other related parts of the embodiments involved in FIG. 2 and FIGs. 3a to 3d. Details may not be repeated herein.

In some embodiments, the above method may include the method described in the above embodiments of the communication system side, the terminal side, the network device side, etc. Details may not be repeated herein.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

The following is an illustrative introduction to the above method.

Optional embodiment: a terminal is configured or reconfigured from mode 1 to mode 2, and an SL consistent LBT failure of a resource block set (RB set) is cancelled.

Illustratively, the terminal is configured or reconfigured from mode 1 to mode 2, and the SL consistent LBT failure of the resource block set (RB set) is canceled. The resource block set (RB set) is a resource block set (RB set) in a resource pool scheduled by the network in mode 1 of the terminal. Specifically, if a resource block set (RB set) in the resource pool scheduled by the network in mode 1 of the terminal triggers the SL consistent LBT failure and the SL consistent LBT failure is not canceled, the terminal is configured or reconfigured from mode 1 to mode 2, and the terminal cancels the SL consistent LBT failure of these resource block sets (RB sets).

Optional embodiment: the terminal is configured or reconfigured from mode 2 to mode 1, and the SL consistent LBT failure of the resource block set (RB set) is cancelled.

Illustratively, the terminal is configured or reconfigured from mode 2 to mode 1, and the SL consistent LBT failure of the resource block set (RB set) is canceled. The resource block set (RB set) is a resource block set (RB set) in the resource pool selected by the terminal in mode 2. Specifically, if the resource block set (RB set) in the resource pool selected by the terminal in mode 2 triggers the SL consistent LBT failure and the SL consistent LBT failure is not canceled, the terminal is configured or reconfigured from mode 2 to mode 1, and the terminal cancels the SL consistent LBT failure of these resource block sets (RB sets).

Optional embodiment: a resource pool is reconfigured, and the SL consistent LBT failure of the resource block set (RB set) in the resource pool is canceled.

Illustratively, the terminal receives resource pool/resource reconfiguration signaling, and if the resource block sets (RB sets) being present on the resource pool trigger the SL consistent LBT failure and the SL consistent LBT failure is not canceled, the SL consistent LBT failure of these resource block sets (RB sets) is canceled.

Illustratively, it is applicable to a terminal in an RRC connected state.

Optional embodiment: the resource pool is switched, and the SL consistent LBT failure of the resource block set (RB set) on the resource pool is canceled.

Illustratively, the terminal receives a resource pool switching instruction, such as receiving a control signaling for scheduling other resource pools. If a resource block set (RB set) being present on this resource pool triggers the SL consistent LBT failure and the SL consistent LBT failure is not canceled, the SL consistent LBT failure of the resource block set (RB set) is canceled.

Illustratively, it is applicable to a terminal in mode 1.

Optional embodiment: an MAC is reset, and an SL consistent LBT failure report procedure is canceled.

Illustratively, a high-level layer requests resetting the MAC entity, and the MAC entity cancels the SL consistent LBT failure report procedure. Specifically, if an SL consistent LBT failure MAC CE is being generated, generation of the SL consistent LBT failure MAC CE is canceled; if the SL consistent LBT failure MAC CE has been generated, sending of the SL consistent LBT failure MAC CE is canceled. The SL consistent LBT failure MAC CE is used to indicate the resource block set (RB set) of the network device that the SL consistent LBT failure happens.

Illustratively, it is applicable to a terminal in mode 1 and a terminal in mode 2 in an RRC connected state.

Optional embodiment: an MAC is reset, and SL consistent LBT failures of all of resource block sets (RB sets) are canceled.

Illustratively, the higher layer requests resetting the MAC entity, and the MAC entity cancels all of the SL consistent LBT failures of the resource block set (RB set) that trigger the SL consistent LBT failures and does not cancel the SL consistent LBT failure.

Illustratively, it is applicable to a terminal in mode 1 or mode 2. It is applicable to a terminal in an RRC CONNECTED/IDLE/INACTIVE state or a terminal in OOC.

Optional embodiment: an SL MAC is reset, an SL consistent LBT failure of the resource block set (RB set) associated with this unicast connection is cancelled.

Illustratively, the MAC layer receives an SL MAC reset request from the upper layer for a PC5-RRC connection, and the terminal cancels the SL consistent LBT failure of the resource block set (RB set) associated with the PC5-RRC connection. Illustratively, the RB set associated with the PC5-RRC connection refers to the resource block set (RB set) used by the PC5-RRC connection, such as the resource block set (RB set) used for PSSCH/PSCCH/PSFCH transmission of the PC5-RRC connection. Optionally, if the resource block set (RB set) associated with the PC5-RRC connection triggers the SL consistent LBT failure and the SL consistent LBT failure has not been canceled, the SL consistent LBT failure of the resource block set (RB set) is canceled.

Illustratively, it is applicable to a terminal in mode 1 or mode 2. It is applicable to a terminal in an RRC CONNECTED/IDLE/INACTIVE state or a terminal in OOC.

It should be noted that the above mode 1 and mode 2 may refer to resource allocation modes of the terminal, mode 1 may be understood as a network scheduling mode, and mode 2 may be understood as a self-selection mode.

The embodiments of the present disclosure also propose an apparatus for implementing any of the above methods, for example, an apparatus is proposed, the above apparatus includes units or modules for implementing various steps performed by the terminal in any of the above methods. For another example, an apparatus is proposed, including units or modules for implementing various steps performed by a network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses may be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

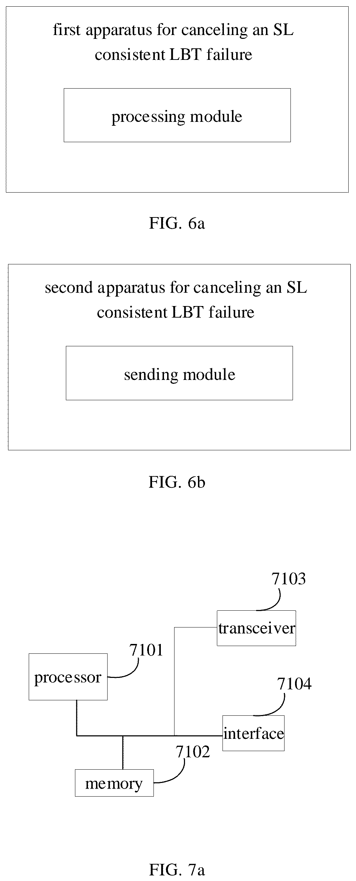

FIG. 6a is a schematic diagram illustrating a structure of a first apparatus for canceling an SL consistent LBT failure according to an embodiment of the disclosure. As shown in FIG. 6a, the first apparatus for canceling the SL consistent LBT failure includes a processing module, configured to cancel an SL consistent LBT failure triggered by a resource block set, in which an SL consistent LBT failure cancellation condition is satisfied. Optionally, the above-mentioned processing module is used to execute the step related to "cancelling an SL consistent LBT failure triggered by a resource block set, in which an SL consistent LBT failure cancellation condition is satisfied" performed by the terminal 101 in any of the above methods, and details are not repeated here. Optionally, the first apparatus for canceling the SL continuous LBT failure further includes at least one of a sending module and a receiving module, and the above-mentioned sending module is used to execute the steps related to sending performed by the terminal 101 in any of the above methods, and the above-mentioned receiving module is used to execute the steps related to receiving performed by the terminal 101 in any of the above methods, and details are not repeated here.

FIG. 6b is a schematic diagram illustrating a structure of a second apparatus for canceling an SL consistent LBT failure according to an embodiment of the disclosure. As shown in FIG. 6b, the second apparatus for canceling the SL consistent LBT failure includes a sending module, configured to send a control instruction to a terminal, in which the control instruction is used by the terminal to determine that an SL consistent LBT failure cancellation condition is satisfied and to cancel an SL consistent LBT failure triggered by a resource block set. Optionally, the above-mentioned sending module is used to execute the step related to "sending a control instruction to a terminal" performed by the network device 102 in any of the above methods, and details are not repeated here. Optionally, the second apparatus for canceling the SL continuous LBT failure further includes a receiving module, and the above-mentioned receiving module is used to execute the steps related to receiving performed by the network device 102 in any of the above methods, and details are not repeated here.

FIG. 7a is a schematic diagram of a communication device 7100 proposed in an embodiment of the present disclosure. The communication device 7100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and for details, reference may be made to the description in the above method embodiments.

As shown in FIG. 7a, the communication device 7100 includes one or more processors 7101. The processor 7101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 7101 is used to call instructions so that the communication device 7100 executes any of the above methods.

In some embodiments, the communication device 7100 further includes one or more memories 7102 for storing instructions. Optionally, all or part of the memory 7102 may be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 7100 further includes one or more interface circuits 7104, which are connected to the memory 7102. The interface circuit 7104 may be used to receive signals from the memory 7102 or other apparatuses, and may be used to send signals to the memory 7102 or other apparatuses. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (7) others, etc.

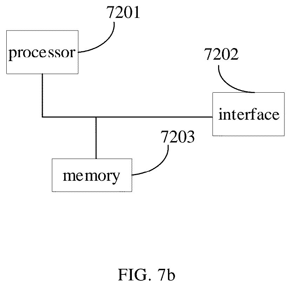

FIG. 7b is a schematic diagram of a chip 7200 proposed in an embodiment of the present disclosure. In case where the communication device 7100 may be a chip or a chip system, reference may be made to the schematic diagram of the chip 7200 shown in FIG. 7b, but the present disclosure is not limited thereto.

The chip 7200 includes one or more processors 7201, and the processor 7201 is used to call instructions so that the chip 7200 executes any of the above methods.

In some embodiments, the chip 7200 further includes one or more interface circuits 7202, which are connected to the memory 7203. The interface circuit 7202 may be used to receive signals from the memory 7203 or other apparatuses, and the interface circuit 7202 may be used to send signals to the memory 7203 or other apparatuses. For example, the interface circuit 7202 may read instructions stored in the memory 7203 and send the instructions to the processor 7201. Optionally, the terms such as "interface circuit", "interface", "transceiver pin", and "transceiver" may be exchangeable with each other.

In some embodiments, the chip 7200 further includes one or more memories 7203 for storing instructions. Optionally, all or part of the memory 7203 may be outside the chip 7200.

The present disclosure also proposes a storage medium, on which instructions are stored, and when the instructions are executed on the communication device 7100, the communication device 7100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 7100, enables the communication device 7100 to execute any of the above methods. Optionally, the program product is a computer program product.

The present disclosure also proposes a computer program, which, when executed on a computer, causes the computer to execute any one of the above methods.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to the embodiments of the present disclosure are wholly or partially generated when the computer program is loaded and executed on a computer. The computer may be a general-purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, in combination with units and algorithm steps of the examples described in the embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for canceling a sidelink (SL) consistent listen-before-talk (LBT) failure, performed by a terminal, comprising:
canceling an SL consistent LBT failure triggered by a resource block set, wherein an SL consistent LBT failure cancellation condition is satisfied.

2. The method according to claim 1, wherein satisfying the SL consistent LBT failure cancellation condition comprises at least one of:
a resource allocation mode of the terminal being switched;
a resource pool to which the resource block set belongs being reconfigured;
a resource pool scheduled by a network device for the terminal being switched from a resource pool to which the resource block set belongs to another resource pool;
a resource pool selected by the terminal being switched from a resource pool to which the resource block set belongs to another resource pool;
a media access control (MAC) entity being reset; or
an SL functionality of the MAC entity for any unicast connection being reset.

3. The method according to claim 1 or 2, wherein the SL consistent LBT failure cancellation condition being satisfied, and canceling the SL consistent LBT failure triggered by the resource block set, comprises:
receiving a control instruction sent by a network device; and
determining, according to the control instruction, that the SL consistent LBT failure cancellation condition is satisfied, and canceling the SL consistent LBT failure triggered by the resource block set.

4. The method according to claim 3, wherein determining, according to the control instruction, that the SL consistent LBT failure cancellation condition is satisfied, and canceling the SL consistent LBT failure triggered by the resource block set comprises:
determining, according to the control instruction, that a resource allocation mode of the terminal is switched, and canceling the SL consistent LBT failure triggered by the resource block set, wherein the control instruction is used to configure or reconfigure the resource allocation mode of the terminal.

5. The method according to claim 4, wherein determining, according to the control instruction, that the resource allocation mode of the terminal is switched, and canceling the SL consistent LBT failure triggered by the resource block set comprises:
determining, according to the control instruction, that the resource allocation mode of the terminal is switched from a network scheduling mode to a self-selection mode; and
canceling the SL consistent LBT failure triggered by the resource block set, wherein a resource block set in a resource pool scheduled by the network device triggers the SL consistent LBT failure and does not cancel the SL consistent LBT failure.

6. The method according to claim 4, wherein determining, according to the control instruction, that the resource allocation mode of the terminal is switched, and canceling the SL consistent LBT failure triggered by the resource block set comprises:
determining, according to the control instruction, that the resource allocation mode of the terminal is switched from a self-selection mode to a network scheduling mode; and
canceling the SL consistent LBT failure triggered by the resource block set, wherein a resource block set in a resource pool selected by the terminal triggers the SL consistent LBT failure and does not cancel the SL consistent LBT failure.

7. The method according to any one of claims 3 to 6, wherein determining, according to the control instruction, that the SL consistent LBT failure cancellation condition is satisfied, and canceling the SL consistent LBT failure triggered by the resource block set comprises:
canceling the SL consistent LBT failure triggered by the resource block set, wherein the control instruction is used to reconfigure a resource pool, and a resource block set in the resource pool reconfigured triggers the SL consistent LBT failure and does not cancel the SL consistent LBT failure.

8. The method according to any one of claims 3 to 7, wherein determining, according to the control instruction, that the SL consistent LBT failure cancellation condition is satisfied, and canceling the SL consistent LBT failure triggered by the resource block set comprises:
canceling the SL consistent LBT failure triggered by the resource block set, wherein the control instruction is used to instruct the network device to switch a resource pool scheduled for the terminal from a current resource pool to another resource pool, and a resource block set being present in the current resource pool triggers the SL consistent LBT failure and does not cancel the SL consistent LBT failure.

9. The method according to any one of claims 1 to 7, wherein the SL consistent LBT failure cancellation condition being satisfied, and canceling the SL consistent LBT failure triggered by the resource block set, comprises:
switching a resource pool selected by the terminal from a current resource pool to another resource pool;
canceling the SL consistent LBT failure triggered by the resource block set, wherein a resource block set being present in the current resource pool triggers the SL consistent LBT failure and does not cancel the SL consistent LBT failure.

10. The method according to any one of claims 1 to 9, wherein the SL consistent LBT failure cancellation condition being satisfied, and canceling the SL consistent LBT failure triggered by the resource block set, comprises:
canceling the SL consistent LBT failure triggered by the resource block set, wherein a MAC entity is reset.

11. The method according to any one of claims 1-10, wherein the resource block set is a resource block set in a configured resource pool that triggers the SL consistent LBT failure and does not cancel the SL consistent LBT failure.

12. The method according to any one of claims 1 to 11, wherein the SL consistent LBT failure cancellation condition being satisfied, and canceling the SL consistent LBT failure triggered by the resource block set, comprises:
canceling the SL consistent LBT failure triggered by the resource block set associated with any unicast connection, wherein an SL functionality of a MAC entity for the any unicast connection is reset.

13. The method according to claim 12, wherein the resource block set associated with the any unicast connection is a resource block set used by at least one of a physical sidelink shared channel (PSSCH), a physical sidelink control channel (PSCCH), or a physical sidelink feedback channel (PSFCH) associated with the any unicast connection.

14. The method according to any one of claims 1 to 13, further comprising:
canceling an SL consistent LBT failure report procedure, wherein a MAC entity is reset.

15. The method according to claim 14, wherein canceling the SL consistent LBT failure report procedure comprises at least one of:
canceling generation of a first report in a case where the first report is being generated, wherein the first report is used to indicate to a network device information of the resource block set that triggers the SL consistent LBT failure; or
canceling sending or resending a first report to a network device in a case where the first report has been generated.

16. A method for canceling a sidelink (SL) consistent listen-before-talk (LBT) failure, performed by a network device, comprising:
sending a control instruction to the terminal, wherein the control instruction is used by the terminal to determine that an SL consistent LBT failure cancellation condition is satisfied and to cancel an SL consistent LBT failure triggered by a resource block set.

17. The method according to claim 16, wherein satisfying the SL consistent LBT failure cancellation condition comprises at least one of:
a resource allocation mode of the terminal being switched;
a resource pool to which the resource block set belongs being reconfigured; or
a resource pool scheduled by the network device for the terminal being switched from a resource pool to which the resource block set belongs to another resource pool.

18. The method according to claim 16 or 17, wherein the control instruction is used to configure a resource allocation mode of the terminal, and the control instruction is used by the terminal to determine that the resource allocation mode of the terminal is switched, and to cancel the SL consistent LBT failure triggered by the resource block set, wherein the resource block set triggers the SL consistent LBT failure and does not cancel the SL consistent LBT failure.

19. The method according to any one of claims 16 to 18, wherein the control instruction is used to reconfigure a resource pool, and the control instruction is used by the terminal to cancel the SL consistent LBT failure triggered by the resource block set in a case where a resource block set being present in the resource pool reconfigured triggers the SL consistent LBT failure and does not cancel the SL consistent LBT failure.

20. The method according to any one of claims 16 to 19, wherein the control instruction is used to instruct the network device to switch a resource pool scheduled for the terminal from a current resource pool to another resource pool, and the control instruction is used by the terminal to cancel the SL consistent LBT failure triggered by the resource block set in a case where a resource block set being present in the current resource pool triggers the SL consistent LBT failure and does not cancel the SL consistent LBT failure.

21. A method for canceling a sidelink (SL) consistent listen-before-talk (LBT) failure, configured in a communication system comprising a network device and a terminal, and the method comprising:
the terminal canceling an SL consistent LBT failure triggered by a resource block set, wherein an SL consistent LBT failure cancellation condition is satisfied.

22. The method according to claim 21, wherein satisfying the SL consistent LBT failure cancellation condition comprises at least one of:
a resource allocation mode of the terminal being switched;
a resource pool to which the resource block set belongs being reconfigured;
a resource pool scheduled by the network device for the terminal being switched from a resource pool to which the resource block set belongs to another resource pool;
a resource pool selected by the terminal being switched from a resource pool to which the resource block set belongs to another resource pool;
a media access control (MAC) entity being reset; or
an SL functionality of the MAC entity for any unicast connection being reset.

23. The method according to claim 21 or 22, further comprising:
the network device sending a control instruction; and
the terminal determining, according to the control instruction, that the SL consistent LBT failure cancellation condition is satisfied, and canceling the SL consistent LBT failure triggered by the resource block set.

24. The method according to any one of claims 21 to 23, wherein the SL consistent LBT failure cancellation condition being satisfied, and canceling the SL consistent LBT failure triggered by the resource block set, comprises:
canceling the SL consistent LBT failure triggered by the resource block set, wherein a MAC entity is reset.

25. The method according to any one of claims 21 to 24, wherein the SL consistent LBT failure cancellation condition being satisfied, and canceling the SL consistent LBT failure triggered by the resource block set, comprises:
canceling the SL consistent LBT failure triggered by the resource block set associated with any unicast connection, wherein an SL functionality of a MAC entity for the any unicast connection is reset.

26. A first apparatus for canceling a sidelink (SL) consistent listen-before-talk (LBT) failure, comprising:
a processing module, configured to cancel an SL consistent LBT failure triggered by a resource block set, wherein an SL consistent LBT failure cancellation condition is satisfied.

27. A second apparatus for canceling a sidelink (SL) consistent listen-before-talk (LBT) failure, comprising:
a sending module, configured to send a control instruction to a terminal, wherein the control instruction is used by the terminal to determine that an SL consistent LBT failure cancellation condition is satisfied and to cancel an SL consistent LBT failure triggered by a resource block set.

28. A communication device, comprising:
one or more processors;
wherein the processor is configured to call instructions to enable the communication device to perform the method for canceling an SL consistent LBT failure according to any one of claims 1 to 15 or any one of claims 16 to 20.

29. A communication system, comprising a terminal and a network device, wherein the terminal is configured to implement the method for canceling an SL consistent LBT failure according to any one of claims 1 to 15, and the network device is configured to implement the method for canceling an SL consistent LBT failure according to any one of claims 16 to 20.

30. A storage medium having instructions stored thereon, wherein when the instructions are performed on a communication device, the communication device is caused to perform the method for canceling an SL consistent LBT failure according to any one of claims 1 to 15 or any one of claims 16 to 20.
